Europäisches Patentamt

European Patent Office

Office européen des brevets

(11) Publication number: **0 184 153 B1**

(12) **EUROPEAN PATENT SPECIFICATION**

(45) Date of publication of patent specification: **24.07.91** (51) Int. Cl.5: **C08F 2/22**, D21H 17/37, D04H 1/64

(21) Application number: **85115169.6**

(22) Date of filing: **29.11.85**

(54) **Formaldehyde-free latex and fabrics made therewith.**

(30) Priority: **03.12.84 US 677414**

(43) Date of publication of application:
**11.06.86 Bulletin 86/24**

(45) Publication of the grant of the patent:
**24.07.91 Bulletin 91/30**

(84) Designated Contracting States:
**AT BE CH DE FR GB IT LI LU NL SE**

(56) References cited:
**EP-A- 0 084 809**

(73) Proprietor: **The B.F. GOODRICH Company
Dept. 0015 WHB-6 500 South Main Street
Akron, Ohio 44318(US)**

(72) Inventor: **Shah, Pravinchandra Kantilal
921 Oliver Street
Sheffield Lake, OH 44054(US)**

(74) Representative: **von Kreisler, Alek,
Dipl.-Chem. et al
Deichmannhaus am Hauptbahnhof
W-5000 Köln 1(DE)**

**Description**

BACKGROUND OF THE INVENTION

Latex binders are used to impart strength and dimensional stability to paper, nonwoven and woven fabrics. A nonwoven fabric is a textile structure consisting of a mat of fibers held together by a binder. The fibers can be partially or completely oriented or they can be randomly distributed.

Nonwoven fabrics are popular owing to the simplicity and economy of their production since the traditional weaving operations are not used; hence, less equipment, less space, and fewer personnel are required. Nonwoven fabrics can also be produced from what would normally be considered as waste fibers, and useful characteristics are obtained which may not be provided by woven or knitted fabrics.

Enormous quantity of fibers are consumed annually in the manufacture of articles such as clothing, interliners, filters, automotive door panels, heat and electrical insulation, packaging, sanitary napkins, fillers for quilted structures, wiping cloths, towels, masks, wall coverings, shoe uppers and liners, curtains and draperies, tea bags, siumulated leather, gaskets, luggage, ribbons, and diapers.

To obtain a nonwoven fabric with substantially uniform strength in all directions, random distribution of the fibers has been achieved by several methods. One of the most popular of such methods involves air-laying of the fibers by stripping same from a carded web by means of an air stream which then directs the fibers through a restricting throat which is controlled to adjust the thickness of the resulting web.

A number of methods have been developed for treating randomly-dispersed webs with a binder. Typically, a water-based emulsion binder system is used in which a thermoplastic or thermoset synthetic polymer latex is included and a loose web of fibers to be treated is immersed therein or sprayed therewith using special equipment in view of the structural weakness of the web. The treated web is then dried and cured to effect proper bonding. Alternatively, an aqueous or solvent solution binder system of a thermoplastic or thermoset resin may be used to impregnate the fibrous web.

Commonly used polymer latexes for paper and woven and nonwoven fabrics are those prepared from one or more of butadiene, styrene, acrylonitrile, ethylene, vinyl acetate, vinyl chloride and acrylic monomers. The acrylic polymer latexes are very popular due to the fact that substrates bonded therewith have generally good strength, excellent initial color, discoloration resistance, and good hand.

The strength and dimensional stability that is required of paper, nonwoven and woven fabrics is currently achieved by bonding fibers in place with a latex that is crosslinkable. Usually, crosslinking is obtained by the copolymerization of functional or reactive monomers into the major copolymer backbone. Examples of such common commercial reactive monomers include N-methylol acrylamide, N-(n-butoxy methyl acrylamide), N-(iso-butoxy methyl)acrylamide, N-methylol methyl acrylamide, and other similar materials. These monomers undergo a condensation reaction on crosslinking that evolves formaldehyde. These monomers also contain formaldehyde as an impurity.

In addition to the reactive monomers, crosslinking is also attained by post-adding various aminoplasts to the latex. In these situations, the use of condensates of melamine and formaldehyde has been prevalent.

On the basis of information presented above, the latex systems used in the past evolved formaldehyde to achieve crosslinking of the polymer solids in the latex binder. This, of course, is undesirable since formaldehyde has been identified as a suspected medical hazard.

EP-A-84 809 discloses a formaldehyde free dispersion in which at least an acrylic acid ester, a hydroxyalkyl ester of an unsaturated mono- or di-carboxylic acid, an acrylamide or methacrylamide and a crosslinker are present. Optionally, further comonomers and/or a mono- or di-carboxylic acid are contained.

SUMMARY OF DISCLOSURE

This invention pertains to a latex and to paper, woven, and nonwoven articles composed of fibers treated with the latex wherein the latex comprises polymer solids obtained by polymerizing at least one monomer in the presence of 0.1 to 10 weight parts of itaconic acid and 0.1 to 10 weight parts of acrylamide, said amounts being based on a total of 100 weight parts of all monomers that are polymerized; said latex being selected from acrylic ester latexes, diene latexes, styrene latexes, vinyl acetate latexes, vinyl chloride latexes, vinylidene chloride latexes, unsaturated nitrile latexes, and olefinic latexes; said latexes being characterized in that they do not include any formaldehyde-containing monomer in polymerized form and do not evolve or decompose to produce formaldehyde, and further in that said latexes simultaneously provide improved aqueous tensile strength and improved solvent elongation.

The monomers in the latex are devoid of formaldehyde and do not evolve or decompose to produce formaldehyde, which is desirable since formaldehyde is a suspected health hazard. The latex also imparts unexpected balance of tensile strength and high elongation.

## DETAILED DESCRIPTION OF THE INVENTION

This invention relates to latexes and to articles composed of fibers bonded with said latexes which do not contain formaldehyde-containing monomers, do not evolve formaldehyde on crosslinking, nor decompose to produce formaldehyde. This is a highly desirable objective in view of the fact that formaldehyde is a suspected health hazard. It should be understood that a latex formulation can contain a small amount of a material, such as sodium formaldehydesulfoxylate useful as a reducing agent, which evolves a very small amount of formaldehyde. Furthermore, although the invention herein is directed to formaldehyde-free latexes, anyone can use such latexes in any way they desire, as by addition of formaldehyde-containing materials, such as urea-formaldehyde, melamine-formaldehyde, and N-methylol acrylamide.

The latexes of this invention incorporate the combination of one or more primary monomer, a monounsaturated dicarboxylic acid, and an amide, which combination yields unexpected physical properties such as elongation, toughness, softness, pile retention and others when compared to latexes containing conventional crosslinking agents, such as N-methylol acrylamide, which produce formaldehyde. The latexes of this invention have, surprisingly, outperformed latexes containing conventional crosslinking monomers in applications such as corduroy backcoating and paper saturation. It is also surprising that the latexes of this invention have elongation that surpasses elongation of any commercial acrylic latexes of assignee which use conventional crosslinking agents.

The use of the latexes disclosed herein results in a different balance of properties, particularly wet strength and elongation. In this context, of special interest is the total elongation as compared to peak elongation. Peak elongation is measured at maximum tensile strength whereas total elongation is a measure of the total tensile elongation curve. High total elongation reflects toughness of a material, which is an indication of the subject matter disclosed and claimed herein.

The invention herein pertains to the use of particular monomer combinations in various synthetic latexes. The monomer combinations referred to herein include one or more principal monomers, itaconic acid in amount of 0.1 to 10 weight parts, and acrylamide in an amount of 0.1 to 10 weight parts. Preferred amount of the acid is 1 to 5 weight parts whereas preferred amount of the amide is also 1 to 5 weight parts. Amounts of acid and amide are based on 100 weight parts of all monomers that are polymerized. The synthetic latexes contemplated herein include acrylic ester latexes, diene latexes, styrene latexes, vinyl acetate latexes, vinyl chloride latexes, nitrile latexes, and olefine latexes.

The acid and amide of the nonomer combinations can be added together or separately.

The alkyl acrylates that can be used to prepare the acrylic ester latex binders of this invention include alkyl acrylates and alkyl methacrylates containing 1 to 12, preferably 1 to 10 carbon atoms in the alkyl group. The polymer backbone in the acrylic ester latexes can be either hydrophilic or hydrophobic and it can comprise polymerized soft monomers and/or hard monomers. The soft and hard monomers are monomers which, when polymerized, Produce soft or hard polymers, or polymers in between. Preferred soft acrylic ester monomers are selected from alkyl acrylates containing 2 to 8 carbon atoms in the alkyl group and include ethyl acrylate, propyl acrylate, n-butyl acrylate, and 2-ethylhexyl acrylate. The hard acrylic ester monomers are selected from alkyl methacrylates containing 1 to 3 carbon atoms in the alkyl group and from non-acrylic monomers such as styrene and substituted styrenes, acrylonitrile, vinyl chloride, and generally any compatible monomer the homopolymer of which has Tg above 50°C. Preferred acrylic ester monomers are selected from alkyl methacrylates containing 1 to 2 carbon atoms in the alkyl group, especially methyl methacrylate.

The acrylic ester latexes can be based on homopolymers of an acrylic ester or copolymers wherein one or more acrylic ester is polymerized with one or more copolymerizable comonomers. In such copolymer acrylic ester latexes, at least 50% and preferably more than 60% by weight of an acrylic ester is polymerized with one or more comonomers such as styrene, acrylonitrile, vinyl chloride, and vinyl acetate.

The diene latexes include homopolymers of butadiene, isoprene, and chloroprene as well as copolymers of these monomers with one or more of styrene, substituted styrene, acrylonitrile, and acrylic esters wherein such copolymer latexes contain at least 20% butadiene in the monomers used.

Styrene latexes are based on styrene homopolymers wherein amount of the principal styrene monomer is 100%, and styrene copolymer latexes wherein amount of styrene is in excess of 50% by weight. In such styrene copolymer latexes, the principal monomer is styrene which is polymerized with one or more comonomers that include butadiene, acrylonitrile, vinyl acetate, acrylic esters. Other styrenes, such as α-methyl styrene and chlorostyrene, can be used in place of or in conjunction with styrene itself.

The vinyl acetate latexes include latexes based on homopolymers of vinyl acetate and copolymers of

3

vinyl acetate with one or more suitable comonomers. The copolymer vinyl acetate latexes contain in excess of about 50% by weight polymerized vinyl acetate and less than 50% by weight of one or more of other comonomers such as acrylic esters, styrene, acrylonitrile, and lower olefins such as ethylene and propylene. Copolymer latexes of vinyl acetate are preferred especially with acrylic ester and olefinic monomers.

The vinyl chloride latexes also include latexes based on homopolymers of vinyl chloride and copolymers of vinyl chloride with one or more of other suitable comonomers. The copolymer vinyl chloride latexes contain more than about 50% by weight of vinyl chloride and less than 50% by weight of other suitable comonomers such vinylidene chloride, acrylic esters, acrylonitrile, vinyl acetate, and styrene. Copolymer latexes of vinyl chloride are preferred especially with acrylic esters and vinyl acetate. This class of latexes also includes vinylidene chloride homopolymer and copolymers thereof with vinyl chloride, vinyl acetate, acrylic esters, dienes, styrene, acrylonitrile.

Nitrile latexes are selected from homopolymers of certain nitriles and copolymers thereof with suitable comonomers wherein the nitrile or a mixture thereof, predominate or constitute more than half of all the polymerized monomers. Suitable nitriles are selected from acrylonitrile, methacrylonitrile, and other unsaturated acrylic nitriles containing 3 to 6 carbon atoms. Suitable comonomers are selected from butadiene, styrene, acrylic esters containing 1 to 12 carbon atoms in the alkyl group, isoprene, chloroprene, and mixtures thereof.

Olefinic latexes are selected from homopolymers of lower olefins of 2 to 6 carbon atoms and copolymers thereof with suitable comonomers. Suitable lower olefins include especially ethylene and propylene, of which there is a preponderance or greater than one-half of all the polymerized monomers in a copolymer. Suitable comonomers include vinyl acetate, vinyl chloride, acrylic esters of 1 to 12 carbon atoms in the alkyl group, and mixtures of such monomers.

The acrylic esters noted herein, which can be used as comonomers with other principal monomers in preparing latexes described herein, are selected from alkyl acrylates and methacrylates containing about 1 to 12 carbon atoms in the alkyl group.

Monocarboxylic monounsaturated acids can also be used as comonomers in the preparation of the latexes described above in amount of 0.1 to 10 weight parts per 100 weight parts of all monomers. Especially suitable acid monomers are acrylic and methacrylic acids.

In recapitulation, one or more principal monomers can be polymerized with one or more suitable comonomers noted below also in the presence of an amide and a monounsaturated dicarboxylic acid in preparing a latex binder for use in treating paper, woven, and nonwoven fabrics composed of any suitable fibers. Generally speaking, examples of such comonomers include olefinically unsaturated monocarboxylic acids containing 3 to 5 carbon atoms, such as acrylic, methacrylic, ethacrylic, and cyanoacrylic acids; olefinically unsaturated nitriles containing 3 to 5 carbon atoms, such as acrylonitrile and methacrylonitrile; vinyl ethers containing 4 to 22 carbon atoms, such as ethyl vinyl ether, chloroethyl vinyl ether, isobutyl vinyl ether, cetyl vinyl ether, and lauryl vinyl ether; vinyl ketones containing 3 to 12 carbon atoms, such as methyl vinyl ketone; acrylic esters containing 1 to 12 carbon atoms in the alkyl group, such as alkyl acrylates and alkyl methacrylates, specifically including ethyl acrylate, butyl acrylate, n-ethylhexyl acrylate, and methyl methacrylate; vinyl esters of carboxylic acids containing 4 to 22 carbon atoms, such as vinyl acetate, vinyl propionate, vinyl formate, vinyl stearate, vinyl benzoate, and vinyl and allyl chloroacetates; alpha olefins containing 2 to 12 carbon atoms, such as ethylene, propylene, isobutylene, and butene-1; dienes containing 4 carbon atoms, such as butadiene and isoprene; styrene and styrene derivatives such as styrene itself, alpha methyl styrene, vinyl toluene, and chlorostyrene; vinyl and vinylidene halides, such as vinyl chloride and vinylidene chloride.

In the preparation of the acrylic ester latex binders described herein, the aqueous medium can contain suitable emulsifiers or it can be free of emulsifiers. When emulsifiers are used to prepare the latexes of this invention, the usual types of anionic and nonionic emulsifiers can be employed. Suitable anionic emulsifiers include alkali metal or ammonium salts of the sulfates of alcohols containing 8 to 18 carbon atoms such as sodium lauryl sulfate, alkali metal and ammonium salts of sulfonated petroleum and paraffin oils, sodium salts of sulfonic acids, aralkyl sulfonates, alkali metal and ammonium salts of sulfonated dicarboxylic acid esters. Nonionic emulsifiers, such as octyl or nonylphenyl polyethoxyethanol, can also be used. Latexes of excellent stability can be prepared with emulsifiers selected from alkali metal and ammonium salts of aromatic sulfonic acids, alkyl and alkylaryl and arylalkyl sulfonates, alkyl sulfates, and poly(oxyalkylene)-sulfonates.

Amount of emulsifiers can vary up to about 5 parts, such as 0.01 to 7 parts by weight per 100 parts by weight of the monomers, and excellent results can be obtained with 0.01 to 1 part of emulsifiers. The latexes described herein are more preferably prepared using very low to moderate levels of emulsifiers, such as 0.005 to 1 part by weight, most favored being in the range of 0.1 to 0.5 dry parts per 100 parts of monomers. The emulsifier can be added at the outset of the polymerization or it can be added incrementally throughout the run.

The polymerization of the latex monomers disclosed herein can be conducted at temperatures of about 5°C to about 100°C, typically about 30° to 85°C, in the presence of a compound capable of initiating polymerization. Commonly used free radical initiators include the various peroxygen compounds such as persulfates, benzoyl peroxide, t-butyl hydroperoxide, and cumene hydroperoxide; and azo compounds such as azodiisobutyronitrile and dimethylazodiisobutyrate. Particularly useful initiators are the water-soluble peroxygen compounds such as hydrogen peroxide and the sodium, potassium and ammonium persulfates used by themselves or in an activated redox system. Typical redox systems include alkali metal persulfates in combination with a reducing substance such as polyhydroxyphenols and oxidizable sulfur compounds, a reducing sugar, dimethylaminopropionitrile, a diazomercaptan compound, and a water-soluble ferrous sulfate compound. Polymer latexes with excellent stability can be obtained using alkali metal and ammonium persulfate initiators. The amount of initiator used will generally be in the range of 0.01 to 3% by weight, based on the weight of the monomers, preferably between 0.2 to 1%. The initiator can be charged at the outset of the polymerization, however, incremental addition of the initiator throughout polymerization can also be employed and is often advantageous.

Typical polymerization for the preparation of the acrylic ester latexes described herein is conducted by charging the reactor with appropriate amount of water, emulsifier and electrolyte, if any is employed, and a portion of the initiator sufficient to initiate polymerization. The reactor is then evacuated, heated to the initiation temperature and monomer premix which has been previously prepared by mixing water, emulsifier, the monomers and polymerization modifiers, if any, is proportioned over several hours. The rate of proportioning is varied depending on the polymerization temperature, the particular initiator employed and the amount of the monomer(s) being polymerized. The rate of polymerization can be increased by metering in an initiator solution. After all the monomer premix has been charged, the final addition of initiator is made and the reactor and the latex heated with agitation for a length of time necessary to achieve the desired conversion. The pH of the latex is in the range of about 2 to 10.

In the acrylic ester latex binder of this invention, the particle size may be in the range of about 100nm (1000A°) to 300nm (3000A°). A generally satisfactory particle size may be, however, from about 50 (500) to 700nm (7000A°). The total solids of the latexes can be varied up to about 65% and may relate to the fluidity wanted in the composition. Generally, it is desired to use a latex containing 40 to 55% solids.

Preparation of the other latexes noted herein is similar to the preparation of the acrylic ester latexes.

The latexes described herein can be compounded with, or have mixed therein, other known ingredients such as emulsifiers, curing agents, fillers, plasticizers, antioxidants or stabilizers, antifoaming agents, dying adjuvants, pigments, or other compounding aids. Furthermore, thickeners or bodying agents may be added to the polymer latexes so as to control the viscosity of the latexes and thereby achieve the proper flow properties for the particular application desired.

Latexes of the present invention can be applied to the web or mat of fibers in any suitable fashion such as by spraying, dipping, roll-transfer. Application of the latexes to the fibers is preferably made at room temperature to facilitate cleaning of the associated apparatus. The solids concentration of the latexes can be in the range of 5% to 60% by weight, and preferably from 5% to 25% when applied by dipping. When applied by roll-transfer, solids concentration of the latexes is generally about 40-50% whereas with the spraying technique, it can range widely.

The proportion of a latex polymer that is applied to the web or mat is such as to provide at least 10%, preferably 25% to 40% by weight of the polymer, based on the total weight of the polymer and fibers. After application of the latex to the fibrous web, the impregnated or saturated web is dried either at room temperature or at elevated temperature. The web is subjected, either after completion of the drying or as the final step of the drying stage itself, to a baking or curing operation which may be effected at a temperature of about 100°C to about 400°C for a period which may range from abut one-half hour at the lower temperatures to as low as a fraction of a second at the upper temperatures. The conditions of baking and curing are controlled so that no appreciable deterioration or degradation of the fibers or polymer occurs. Preferably, the curing is effected at a temperature of 120° to 160°C for a period of 0.5 to 10 minutes.

An acid catalyst can be included in the latexes at the time it is applied to the fibrous web or it may be applied to the fibrous web before or after the latex is applied. Examples of acidic catalysts that may be employed include oxalic acid, dichloracetic acid, p-toluenesulfonic acid, and salts such as ammonium sulfate and hydrochloride of 2-methyl-2-aminopropanol-1.

The fibers that are bonded with the latexes described herein are in the form of nonwoven mats or webs in which they are ordered or are randomly distributed. The web can be formed by carding when the fibers are of such a character, by virtue of length and flexability, as to be amenable to the carding operation. The fibers may comprise natural textile fibers such as cellulose, jute, sisal, ramie, hemp and cotton, as well as many of the synthetic organic textile fibers including rayon, those of cellulose esters such as cellulose acetate, vinyl resin fibers such as those of polyvinyl chloride and copolymers thereof, polyacrylonitrile and copolymers thereof, polyesters such as poly(ethylene terephthalate), polymers and copolymers of olefins such as ethylene and propylene, condensation polymers such as polyimides or nylon types. The fibers used can be those of a single composition or mixtures of fibers in a given web.

The latex binders described herein are suitable for cellulosic materials and for blends of cellulosic materials with polyester or nylon. The materials referred to herein include particularly paper made by bonding cellulosic fibers with the latex binder of this invention; nonwoven fabric made by bonding natural, synthetic or a mixture of such fibers with the binder of this invention; and woven fabrics treated with a latex binder.

Among the myriad of applications that can be listed for the latex binders described herein, the principal group relates to sanitary products particularly table napkins, bibs, tableclothes, sanitary napkins, disposable diapers, disposable sheets, surgical dressings and compresses. These products have a desirable degree of water resistance, as indicated by their wet strength, but at the same time maintain a level of water permeability so as to permit transport of body fluids, such as perspiration and urine, through the coverstock into the underlying absorptive pad.

A particularly interesting application for the acrylic ester latex binder disclosed herein is as a corduroy backcoating wherein the latex is applied to the back size of a formed corduroy fabric for pile retention, dimensional stability, strength, and good hand.

The following examples are presented for the purpose of illustrating the invention disclosed herein in greater detail. The examples are not, however, to be construed as limiting the invention herein in any manner, the scope of which is defined by the appended claims.

EXAMPLE 1

For purposes of comparison, samples A to E of formaldehyde-free and formaldehyde-containing latexes were prepared and tested for numerous properties. Each latex was prepared pursuant to the same conventional procedure on the basis of the formulations given in Table 1, in weight parts. In the table, NMA designates N-methylol acrylamide, t-$C_{12}$ mercaptan was used as a chain transfer agent to control molecular weight, and same anionic emulsifier was used in all samples.

EP 0 184 153 B1

## TABLE I

| Material | Latex A | Latex B | Latex C | Latex D | Latex E |
|---|---|---|---|---|---|
| N-Butyl Acrylate | 81.5 | 81.5 | 81.0 | 81.0 | 80.95 |
| Styrene | 18.5 | 18.5 | 15.0 | 15.0 | 14.3 |
| NMA | -- | -- | 1.0 | 1.0 | -- |
| Acrylic Acid | -- | -- | 3.0 | 3.0 | -- |
| Acrylamide | -- | -- | -- | -- | 1.9 |
| Itaconic Acid | -- | -- | -- | -- | 2.85 |
| $t$-$C_{12}$ Mercaptan | -- | -- | -- | 0.35 | -- |
| Anionic Emulsifier | 0.3 | 1.0 | 0.3 | 0.3 | 0.3 |
| Tg, °C | -26 | -26 | -27 | -27 | -26.5 |
| Total Solids, % | 47.8 | 46.9 | 46.3 | 47.1 | 51.9 |
| pH | 4.9 | 4.5 | 4.6 | 4.1 | 3.1 |
| Brookfield Viscosity, mPa.s (cps.) | 26 | 26 | 31 | 37.5 | 67.5 |
| Surface Tension, mN/m (dynes/cm) | 57.2 | 49.0 | 44.2 | 44.8 | 52.5 |
| % Polymer | -- | 39.4 | 37.0 | 37.0 | 34.2 |

Table 1 (Continued)

| Material | Latex A | Latex B | Latex C | Latex D | Latex E |
|---|---|---|---|---|---|
| Max Tensile, Dry | -- | 2.0 | 6.1 | 4.6 | 4.9 |
| Max Tensile, Wet | -- | 0.1 | 3.8 | 1.3 | 2.0 |
| %Elongation, Dry | | | | | |
| Peak | -- | 2.1 | 4.8 | 3.4 | 4.6 |
| Total | -- | 7.1 | 9.8 | 7.6 | 20.0 |
| % Elongation, Wet | | | | | |
| Peak | -- | 0.5 | 8.6 | 4.0 | 6.6 |
| Total | -- | 0.5 | 12.5 | 12.0 | 28.1 |

In preparing latex impregnated paper samples, each latex was diluted to 15-16% solids and pH thereof was adjusted to a constant value. Sample strips of 30.48x40.64cm (12"x16") were cut out from bleached kraft flat paper of 280-micrometer or 11-mil thickness. Each side of the paper strips was placed in latex for 10-15 seconds for saturation purposes and then the paper strips were hang-dried overnight in the laboratory. Curing was effected at 325°F (163°C) in 3 minutes. Before testing, the strips were cut to 2.54x15.24cm (1"x6") size and then tested.

In Table 1, latex A was unstable and, therefore, was not used any further. Elongation, strength retention and toughness were obtained on wet and dry samples whereas elongation was also determined for samples soaked in perchloroethylene, a common dry cleaning solvent.

Testing of the latex-impregnated paper strips was carried out on a Thwing Albert® Tester at a head speed of 2.5 cm/min, gage length of 10cm, and at a chart recorder speed of 10cm/min. Precent polymer is better explained by describing 40% polymer as a saturated paper sample of which 40% is polymer and 60% represents the weight of fibers. The data obtained was an average of 3 tests.

Examination of the data in Table 1 shows that the latex of this invention has a unique and an unexpected balance of tensile strength, given in kg/cm, and high percent elongation. This is evident from the comparison of latexes D and E where the prior art latex D shows not only lower tensile strength properties but also lower % elongation when compared to latex E, which represents the invention described and claimed herein. Latex C has higher strength but lower total elongation, contains formaldehyde, and has stiffer hand compared to invention latex. This high elongation properties are of extreme importance in several commercial applications. Elongation at peak was measured at maximum tensile strength.

## EXAMPLE 2

Latex samples F to K were prepared in the usual way using a variety of different monounsaturated dicarboxylic acids, and acrylic acid. Formulations in weight parts for the latexes are given in Table 2, below. Same paper $280\mu$m (11-mil) was used in preparing latex-saturated paper strips in the manner already described. The tests, however, were conducted on an Instron® Tensile Tester and data was calculated directly. Tensile strength is given in kg/cm. TEA toughness, which stands for tensile energy absorption, was obtained by cutting out and weighing the paper under the curve. The toughness property reflects total elongation. The data is also given in Table 2, below.

EP 0 184 153 B1

TABLE 2

| Material | Latex F | Latex G | Latex H | Latex I | Latex J | Latex K |
|---|---|---|---|---|---|---|
| Ethyl Acrylate | 95 | 95 | 95 | 95 | -- | 31 |
| n-Butyl Acrylate | -- | -- | -- | -- | 68 | 49 |
| Styrene | -- | -- | -- | -- | 27 | 15 |
| Acrylic Acid | 3.0 | -- | -- | -- | -- | -- |
| Maleic Acid | -- | -- | 3.0 | -- | -- | -- |
| Fumaric Acid, $NH_4$ salt | -- | -- | -- | 3.0 | -- | -- |
| Acrylamide | 2.0 | 2.0 | 2.0 | 2.0 | 2.0 | 2.0 |
| Itaconic Acid | -- | 3.0 | -- | -- | 3.0 | 3.0 |
| Emulsifier | 0.35 | 0.35 | 0.35 | 0.35 | 0.35 | 0.35 |
| Tg, °C | -9 | -10 | NA | NA | -6 | -13 |
| Total solids, % | 49.0 | 47.9 | 47.1 | 47.4 | 47.2 | 46.7 |
| pH | 4.2 | 3.3 | 1.8 | 6.4 | 3.2 | 3.3 |
| Brookfield Viscosity, mPa.s (cps.) | 126 | 28 | 21.2 | 28.7 | 27 | 44.5 |
| Surface Tension, mN/m (dynes/cm.) | 48.6 | 43.3 | 48.9 | 40.0 | 54.7 | 51.5 |

Table 2 (Continued)

| Material | Latex F | Latex G | Latex H | Latex I | Latex J | Latex K |
|---|---|---|---|---|---|---|
| % Polymer | 31.2 | 32.2 | 32.2 | 33.1 | 32.0 | 32.1 |
| Max Tensile, Dry | 7.6 | 7.4 | 6.1 | 6.1 | 7.5 | 7.0 |
| Max Tensile, Wet | 1.5 | 2.6 | 2.2 | 2.2 | 3.2 | 3.0 |
| Toughness, Wet (TEA) | 0.100 | 0.151 | 0.232 | 0.268 | 0.172 | 0.199 |

As shown in Table 2, wet tensile strength of invention Latex G was 2.6 kg/cm where as wet tensile strength of the prior art Latex F was only 1.5. Also, the toughness of invention latex G was dramatically higher when compared to Latex F, which had a value of only 0.100.

EXAMPLE 3

Additional latex samples L to R were prepared in the usual manner to show the use and affect of different comonomers. The formulations and the data, obtained as in Example 1, are given in Table 3, below, where latex E is also presented for comparison purposes:

TABLE 3

Monomer Composition of Formulations

| Material | Latex E | Latex L | Latex M | Latex N | Latex O | Latex P | Latex Q | Latex R |
|---|---|---|---|---|---|---|---|---|
| n-Butyl Acrylate | 80.95 | 80.95 | 80.95 | 80.95 | 80.95 | 80.95 | – | – |
| Styrene | 14.3 | 12.4 | – | – | 16.1 | 17.15 | 25 | 35 |
| Acrylamide | 1.9 | 1.9 | 1.9 | 1.9 | – | 1.9 | 2.0 | 2.0 |
| Itaconic Acid | 2.85 | 2.85 | 2.85 | 2.85 | 2.85 | – | 3.0 | 3.0 |
| Acrylo-nitrile | – | – | 14.3 | – | – | – | – | – |
| Acrylic Acid | – | 1.9 | – | – | – | – | – | – |
| Methyl Meth-Acrylate | – | – | – | 14.3 | – | – | – | – |
| 2-Ethylhexyl Acrylate | – | – | – | – | – | – | 70 | 60 |

EP 0 184 153 B1

## Table 3 (Continued)

| Material | Latex E | Latex L | Latex M | Latex N | Latex O | Latex P | Latex Q | Latex R |
|---|---|---|---|---|---|---|---|---|
| Tg, °C | -26.5 | -26 | -21 | -28.5 | -27 | -25 | -25.5 | -11.5 |
| % Polymer | 34.2 | 34.2 | 35.4 | 32.9 | 34.8 | 34.6 | 32.7 | 33.1 |
| Max Tensile, Dry | 4.9 | 5.9 | 7.5 | 5.1 | 4.0 | 4.0 | 3.5 | 6.5 |
| Max Tensile, Wet | 2.0 | 2.2 | 4.4 | 2.0 | 1.5 | 0.8 | 1.4 | 4.1 |
| Max Tensile, Perchlor | 1.3 | 1.7 | 2.2 | 1.5 | TSTC | 0.5 | 1.1 | 1.1 |
| % Dry Elongation At Peak | 4.6 | 6.2 | 5.7 | 5.0 | 4.0 | 4.3 | 3.2 | 5.0 |
| % Wet Elongation At Peak | 6.6 | 6.9 | 9.9 | 6.4 | 6.3 | 5.2 | 5.7 | 10.1 |
| % Dry Elongation, Perchlor At Peak | 1.4 | 1.8 | 2.9 | 1.5 | TSTC | 1.2 | 0.72 | 0.69 |
| % Total Elongation, Dry | 20.0 | 13.3 | 7.2 | 15.4 | 27.2 | 14.2 | 21.5 | 10.2 |
| Wet | 28.1 | 30.4 | 12.4 | 24.9 | 36.6 | 23.0 | 36.2 | 11.7 |
| Perchlor | 2.6 | 3.2 | 7.2 | 2.6 | TSTC | 1.6 | 1.4 | 2.56 |

Table 3 (Continued)

| Material | Latex E | Latex L | Latex M | Latex N | Latex O | Latex P | Latex Q | Latex R |
|---|---|---|---|---|---|---|---|---|
| TEA at Peak | | | | | | | | |
| Dry | 0.95 | 1.57 | 1.68 | 1.06 | 0.67 | 0.743 | 0.472 | 1.26 |
| Wet | 0.508 | 0.611 | 1.50 | 0.471 | 0.377 | 0.177 | 0.302 | 1.48 |
| Perchlor | 0.062 | 0.128 | 0.27 | 0.086 | TSTC | 0.02 | 0.027 | 0.026 |
| TEA Total | | | | | | | | |
| Dry | 3.66 | 3.59 | 2.18 | 2.79 | 3.21 | 2.07 | 2.163 | 2.95 |
| Wet | 2.07 | 2.49 | 1.83 | 1.77 | 2.07 | 0.699 | 1.618 | 1.75 |
| Perchlor | 0.089 | 0.171 | 0.475 | 0.115 | TSTC | 0.023 | 0.036 | 0.049 |

*TSTC Means Too Small To Calculate

In reference to Table 3, the toughness at peak and total, plus other data, shows that using either the itaconic acid or acrylamide alone does not produce the desired balance of wet strength, perchlor strength, and elongation. Latex L, which combines a dicarboxylic acid and a monocarboxylic acid in presence of acrylamide, further improves all tested properties except dry total elongation. Latex M, in which styrene was replaced by acrylonitrile, shows improvements in all properties except for % total dry and wet elongation

14

and total dry and wet toughness. This substitution also increases Tg temperature due to the fact that acrylonitrile is stiffer comonomer in the recipe than is styrene. Latexes Q and R were prepared from the same comonomers but the ratio of styrene to n-butyl acrylate was varied. This change in Tg is reflected in all the measured properties.

## Claims

1. Latex comprising polymer solids prepared by polymerizing at least one monomer in the presence of 0.1 to 10 weight parts of itaconic acid and 0.1 to 10 weight parts of acrylamide, said amounts being based on a total of 100 weight parts of all monomers that are polymerized; said latex being selected from acrylic ester latexes, diene latexes, styrene latexes, vinyl acetate latexes, vinyl chloride latexes, vinylidene chloride latexes, unsaturated nitrile latexes, and olefinic latexes; said latexes being characterized in that they do not include any formaldehyde-containing monomer in polymerized form and do not evolve or decompose to produce formaldehyde.

2. Latex of Claim 1 wherein said latex is selected from latexes containing at least one principal monomer in polymerized form selected from alkyl acrylates of 1 to 12 carbon atoms in the alkyl group, styrene, dienes of 4 carbon atoms, vinyl acetate, vinyl chloride, vinylidene chloride, unsaturated nitriles of 3 to 6 carbon atoms, olefins of 2 to 6 carbon atoms, and mixtures thereof.

3. Latex of Claim 1 wherein said acrylic ester latexes are selected from homopolymers of said alkyl acrylates and copolymers thereof with one or more suitable comonomers, said copolymers containing at least 50% by weight of polymerized alkyl acrylate; diene latexes are selected from homopolymers of said dienes of 4 carbon atoms and copolymers thereof with one or more suitable comonomers, said copolymers containing at least 20% by weight of polymerized diene; styrene latexes are selected from homopolymers of styrene and copolymers thereof with one or more suitable comonomers, said copolymers containing at least 50% by weight a polymerized styrene; vinyl acetate latexes are selected from homopolymers of vinyl acetate and copolymers thereof with suitable comonomers, said copolymers containing at least 50% by weight polymerized vinyl acetate; vinyl chloride latexes are selected from homopolymers of vinyl chloride and vinylidene chloride and copolymers thereof with one or more suitable comonomers, said copolymers containing at least 50% by weight polymerized vinyl chloride or vinylidene chloride; nitrile latexes are selected from homopolymers of unsaturated nitriles of 3 to 6 carbon atoms and copolymers thereof with suitable comonomers, said copolymers containing at least 50% by weight polymerized unsaturated nitriles of 3 to 6 carbon atoms; and olefinic latexes are selected from homopolymers of olefins containing 2 to 6 carbon atoms and copolymers thereof with suitable comonomers, said copolymers containing at least 50% by weight polymerized olefins of 2 to 6 carbon atoms.

4. Latex of Claim 3 wherein said alkyl acrylates of said acrylic ester latexes contain 1 to 12 carbon atoms in the alkyl group and said comonomers are selected from styrene, acrylonitrile, vinyl chloride, vinyl acetate, and mixtures thereof; said dienes of said diene latexes are selected from butadiene, isoprene, and chloroprene, and said comonomers are selected from styrene, substituted styrenes, acrylonitrile, acrylic esters containing 1 to 12 carbon atoms in the alkyl group, and mixtures thereof; said styrene of said styrene latexes is selected from styrene itself, -methyl styrene, and chlorostyrene, and said comonomers are selected from butadiene, vinyl acetate, acrylonitrile, acrylic esters containing 1 to 12 carbon atoms in the alkyl group, and mixtures thereof; said comonomers of said vinyl acetate latexes are selected from acrylic esters of 1 to 12 carbon atoms in the alkyl group, styrene, acrylonitrile, olefins of 2 to 6 carbon atoms, and mixtures thereof; said comonomers of said vinyl chloride latexes are selected from acrylic esters of 1 to 12 carbon atoms in the alkyl group, acrylonitrile, vinyl acetate, styrene, vinylidene chloride in the case of a vinyl chloride latex, and mixtures thereof; said comonomers of said nitrile latexes are selected from butadiene, styrene, isoprene, chloroprene, acrylic esters containing 1 to 12 carbon atoms in the alkyl group, and mixtures thereof; and said comonomers of said olefinic latexes are selected from vinyl acetate, vinyl chloride, acrylic esters of 1 to 12 carbon atoms in the alkyl group, and mixtures thereof.

5. An article of manufacture comprising fibers bonded together with a latex comprising polymer solids prepared by polymerizing at least one monomer in the presence of 0.1 to 10 weight parts of itaconic acid and 0.1 to 10 weight parts of acrylamide, said amounts being based on a total of 100 weight parts of all monomers that are polymerized; said latex being selected from acrylic ester latexes, diene latexes, styrene latexes, vinyl acetate latexes, vinyl chloride latexes, vinylidene chloride latexes, unsaturated nitrile latexes, and olefinic latexes; said latexes being characterized in that they do not include any formaldehyde-containing monomer in polymerized form and do not evolve or decompose to produce formaldehyde, and further in that said latexes simultaneously provide improved aqueous tensile strength and improved solvent elongation.

6. Article of Claim 5 wherein said latex is selected from latexes containing at least one principal monomer in polymerized form selected from alkyl acrylates of 1 to 12 carbon atoms in the alkyl group, styrene, dienes of 4 carbon atoms, vinyl acetate, vinyl chloride, vinylidene chloride, unsaturated nitriles of 3 to 6 carbon atoms, olefins of 2 to 6 carbon atoms, and mixtures thereof.

7. Article of Claim 5 wherein said acrylic ester latexes are selected from homopolymers of said alkyl acrylates and copolymers thereof with one or more suitable comonomers, said copolymers containing at least 50% by weight of polymerized alkyl acrylate; diene latexes are selected from homopolymers of said dienes of 4 carbon atoms and copolymers thereof with one or more suitable comonomers, said copolymers containing at least 20% by weight of polymerized diene; styrene latexes are selected from homopolymers of a styrene and copolymers thereof with one or more suitable comonomers, said copolymers containing at least 50% by weight a polymerized styrene and; vinyl acetate latexes are selected from homopolymers of vinyl acetate and copolymers thereof with suitable comonomers, said copolymers containing at least 50% by weight polymerized vinyl acetate; and vinyl chloride latexes are selected from homopolymers of vinyl chloride and vinylidene chloride and copolymers thereof with one or more suitable comonomers, said copolymers containing at least 50% by weight polymerized vinyl chloride or vinylidene chloride; nitrile latexes are selected from homopolymers of unsaturated nitriles of 3 to 6 carbon atoms and copolymers thereof with suitable comonomers, said copolymers containing at least 50% by weight polymerized unsaturated nitriles of 3 to 6 carbon atoms; and olefinic latexes are selected from homopolymers of olefins containing 2 to 6 carbon atoms and copolymers thereof with suitable comonomers, said copolymers containing at least 50% by weight polymerized olefins of 2 to 6 carbon atoms.

8. Article of Claim 7 wherein said alkyl acrylates of said acrylic ester latexes contain 1 to 12 carbon atoms in the alkyl group and said comonomers are selected from styrene, acrylonitrile, vinyl chloride, vinyl acetate, and mixtures thereof; said dienes of said diene latexes are selected from butadiene, isoprene, and chloroprene, and said comonomers are selected from styrene, substituted styrenes, acrylonitrile, acrylic esters containing 1 to 12 carbon atoms in the alkyl group, and mixtures thereof; said styrene of said styrene latexes is selected from styrene itself, $\alpha$-methyl styrene, and chlorostyrene, and said comonomers are selected from butadiene, vinyl acetate, acrylonitrile, acrylic esters containing 1 to 12 carbon atoms in the alkyl group, and mixtures thereof; said comonomers of said vinyl acetate latexes are selected from acrylic esters of 1 to 12 carbon atoms in the alkyl group, styrene, acrylonitrile, olefins of 2 to 6 carbon atoms, and mixtures thereof; said comonomers of said vinyl chloride latexes are selected from acrylic esters of 1 to 12 carbon atoms in the alkyl group, acrylonitrile, vinyl acetate, styrene, vinylidene chloride in the case of a vinyl chloride latex, and mixtures thereof; said comononers of said nitrile latexes are selected from butadiene, styrene, isoprene, chloroprene, acrylic esters containing 1 to 12 carbon atoms in the alkyl group, and mixtures thereof; and said comonomers of said olefinic latexes are selected from vinyl acetate, vinyl chloride, acrylic esters of 1 to 12 carbon atoms in the alkyl group, and mixtures thereof.

9. Article of Claim 5 selected from paper and woven and nonwoven fabrics made from fibers bonded with said latex or treated with said latex.

10. Article of Claim 5 wherein said fibers are selected from natural fibers, synthetic fibers, and mixtures thereof.

11. Article of Claim 5 wherein said fibers are selected from cellulose fibers, polyolefin fibers, polyester fibers, nylon fibers, and mixtures thereof.

12. Article of Claim 5 wherein amount of itaconic acid is 1 to 5 weight parts and amount of acrylamide is 1 to 5 weight parts.

EP 0 184 153 B1

## Revendications

1. Latex comprenant des solides de polymère préparé par polymérisation d'au moins un monomère en présence de 0,1 à 10 parties en poids d'acide itaconique et de 0,1 à 10 parties en poids d'acrylamide ,lesdites quantités étant basées sur un total de 100 parties en poids de tous les monomères qui sont polymérisés ; ledit latex étant choisi parmi des latex d'un ester acrylique , des latex de diène(s) , des latex de styrène , des latex d'acétate de vinyle , des latex de chlorure de vinyle , des latex de chlorure de vinylidène , des latex de nitriles insaturés et des latex oléfiniques ; lesdits latex étant caractérisés en ce qu'ils ne comportent pas de monomère contenant du formaldéhyde, sous forme polymérisée et en ce qu'ils ne produisent pas de formaldéhyde par dégagement ou par décomposition .

2. Latex selon la revendication 1 , dans lequel ledit latex est choisi parmi des latex contenant au moins un monomère principal sous forme polymérisée , choisi parmi des acrylates d'alkyles ayant 1 à 12 atomes de carbone dans le groupe alkyle , le styrène , des diènes ayant 4 atomes de carbone , l'acétate de vinyle , le chlorure de vinyle, le chlorure de vinylidène, des nitriles insatures ayant 3 à 6 atomes de carbone, des oléfines de 2 à 6 atomes de carbone, et leurs mélanges

3. Latex selon la revendication 1 , dans lequel lesdits latex d'un ester acrylique sont choisis parmi des homopolymères desdits acrylates d'alkyles et leurs copolymères avec un ou plusieurs comonomères convenables , lesdits copolymères contenant au moins 50 % en poids d'un acrylate d'alkyle polymérisé ; les latex de diène(s) sont choisis parmi des homopolymères desdits diènes de 4 atomes de carbone et leurs copolymères avec un ou plusieurs comonomères convenables , lesdits copolymères contenant au moins 20 % en poids de diène polymérisé ; les latex de styrène sont sont choisis parmi des homopolymères de styrène et leurs copolymères avec un ou plusieurs comonomères convenables , lesdits copolymères contenant au moins 50 % en poids d'un styrène polymérisé ; les latex d'acétate de vinyle sont choisis parmi les homopolymères de l'acétate de vinyle et leurs copolymères avec des comonomères convenables,lesdits copolymères contenant au moins 50 en poids d'acétate de vinyle polymérisé ; les latex de chlorure de vinyle sont choisis parmi les homopolymères de chlorure de vinyle et de chlorure de vinylidène et leurs copolymères avec un ou plusieurs comonomères convenables , lesdits copolymères contenant au moins 50 % en poids de chlorure de vinyle ou de chlorure de vinylidène polymérisés ; les latex de nitrile sont choisis parmi les homopolymères de nitriles insaturés ayant 3 à 6 atomes de carbone et leurs copolymères avec des comonomères convenables , lesdits copolymères contenant au moins 50 % en poids de nitriles insaturés,ayant 3 à 6 atomes de carbone , polymérisés ; et les latex oléfiniques sont choisis parmi les homopolymères d'oléfines contenant 2 à 6 atomes de carbone et leurs copolymères avec des comonomères convenables , lesdits copolymères contenant au moins 50 % en poids d'oléfines polymérisées contenant 2 à 6 atomes de carbone .

4. Latex selon la revendication 3 , dans lequel lesdits acrylates d'alkyles desdits latex d'un ester acrylique contiennent 1 à 12 atomes de carbone dans le groupe alkyle,et lesdits comonomères sont choisis parmi le styrène , l'acrylonitrile , le chlorure de vinyle , l'acétate de vinyle et leurs mélanges ; lesdits diènes desdits latex de diènes sont choisis parmi le butadiène , l'isoprène , et le chloroprène , et lesdits comonomères sont choisis parmi le styrène , des styrènes substitués , l'acrylonitrile , des esters acryliques contenant 1 à 12 atomes de carbone dans le groupe alkyle , et leurs mélanges ; ledit styrène desdits latex de styrène est choisi parmi le styrène lui-même ,l'α-méthylstyrène et du chlorostyrène , et lesdits comonomères sont choisis parmi le butadiène , l'acétate de vinyle , l'acrylonitrile , des esters acryliques contenant 1 à 12 atomes de carbone dans le groupe alkyle , et leurs mélanges ; lesdits comonomères desdits latex d'acétate de vinyle sont choisis parmi des esters acryliques ayant 1 à 12 atomes de carbone dans le groupe alkyle , le styrène , lacrylonitrile , des oléfines ayant 2 à 6 atomes de carbone , et leurs mélanges ; lesdits comonomères desdits latex de chlorure de vinyle sont choisis parmi des esters acryliques ayant 1 à 12 atomes de carbone dans le groupe alkyle , l'acrylonitrile , l'acétate de vinyle , le styrène , le chlorure de vinylidène dans le cas d'un latex de chlorure de vinyle , et leurs mélanges ; lesdits comonomères desdits latex de nitriles sont choisis parmi le butadiène , le styrène , l'isoprène , le chloroprène , les esters acryliques contenant 1 à 12 atomes de carbone dans le groupe alkyle , et leurs mélanges ; et lesdits comonomères desdits latex oléfiniques sont choisis parmi l'acétate de vinyle , le chlorure de vinyle ,les esters acryliques ayant 1 à 12 atomes de carbone dans le groupe alkyle, et leurs mélanges .

5. Article manufacturé , comprenant des fibres liées ensemble à l'aide d'un latex comprenant des solides

EP 0 184 153 B1

de polymère préparé par la polymérisation d'au moins un monomère en présence de 0,1 à 10 parties en poids d'acide itaconique et de 0,1 à 10 parties en poids d'acrylamide , lesdites quantités étant basées sur un total de 100 parties en poids de tous les monomères qui sont polymérisés ; ledit latex étant choisi parmi des latex d'un ester acrylique , des latex de diène(s) , des latex de styrène , des latex d'acétate de vinyle , des latex de chlorure de vinyle , des latex de chlorure de vinylidène , des latex de nitriles insaturés , et des latex oléfiniques ; lesdits latex étant caractérisés en ce qu'ils ne comportent pas de monomère contenant du formaldéhyde,sous forme polymérisée et en ce qu'ils ne produisent pas de formaldéhyde par dégagement ou par décomposition ,et en outre en ce que lesdits latex confèrent simultanément une meilleure résistance à la traction en milieu aqueux et un meilleur allongement en présence d'un solvant.

6. Article selon la revendication 5 , dans lequel ledit latex est choisi parmi des latex contenant au moins un monomère principal,sous forme polymérisée, choisi parmi des acrylates d'alkyle ayant 1 à 12 atomes de carbone dans le groupe alkyle , le styrène , des diènes ayant 4 atomes de carbone , l'acétate de vinyle , le chlorure de vinyle , le chlorure de vinylidène , des nitriles insaturés ayant 3 à 6 atomes de carbone , des oléfines ayant 2 à 6 atomes de carbone, et leurs mélanges .

7. Article selon la revendication 5 , dans lequel lesdits latex d'esters acryliques sont choisis parmi des homopolymères desdits acrylates d'alkyles et leurs copolymères avec un ou plusieurs comonomères convenables , lesdits copolymères contenant au moins 50 % en poids d'acrylate d'alkyle polymérisé ; les latex de diènes sont choisis parmi les homopolymères desdits diènes ayant 4 atomes de carbone et leurs copolymères avec un ou plusieurs comonomères convenables , lesdits copolymères contenant au moins 20 % en poids de diène polymérisé ; les latex de styrène sont choisis parmi les homopolymères d'un styrène et ses copolymères avec un ou plusieurs comonomères convenables ,lesdits copolymères contenant au moins 50 % en poids d'un styrène polymérisé ; et les latex d'acétate de vinyle sont choisis parmi les homopolymères de l'acétate de vinyle et ses copolymères avec des comonomères convenables , lesdits copolymères contenant au moins 50 % en poids d'acétate de vinyle polymérisé ; et les latex de chlorure de vinyle sont choisis parmi des homopolymères du chlorure de vinyle et du chlorure de vinylidène et leurs copolymères avec un ou plusieurs comonomères convenables , lesdits copolymères contenant au moins 50 % en poids de chlorure de vinyle ou de chlorure de vinylidène polymérisés ; les latex de nitriles sont choisis parmi les homopolymères de nitriles insaturés ayant 3 à 6 atomes de carbone et leurs copolymères avec des comonomères convenables , lesdits copolymères contenant au moins 50 % en poids de nitriles insaturés,ayant 3 à 6 atomes de carbone, polymérisés ; et les latex oléfiniques sont choisis parmi les homopolymères d'oléfines contenant 2 à 6 atomes de carbone et leurs copolymères avec des comonomères convenables , lesdits copolymères contenant au moins 50 % en poids d'oléfines, ayant 2 à 6 atomes de carbone , polymérisées .

8. Article selon la revendication 7 , dans lequel lesdits acrylates d'alkyle desdits latex d'esters acryliques contiennent 1 à 12 atomes de carbone dans le groupe alkyle et lesdits comonomères sont choisis parmi le styrène, l'acrylonitrile , le chlorure de vinyle , l'acétate de vinyle, et leurs mélanges ; lesdits diènes desdits latex de diènes sont choisis parmi le butadiène , l'isoprène , et le chloroprène , et lesdits comonomères sont choisis parmi le styrène , des styrènes substitués , l'acrylonitrile , des esters acryliques contenant 1 à 12 atomes de carbone dans le groupe alkyle , et leurs mélanges ; ledit styrène desdits latex de styrène est choisi parmi le styrène lui-même , l' α-méthyl styrène et du chlorostyrène , et lesdits comonomères sont choisis parmi le butadiène , l'acétate de vinyle , l'acrylonitrile , les esters acryliques contenant 1 à 12 atomes de carbone dans le groupe alkyle , et leurs mélanges ; lesdits comonomères desdits latex d'acétate de vinyle sont choisis parmi des esters acryliques ayant 1 à 12 atomes de carbone dans le groupe alkyle , le styrène , l'acrylonitrile , les oléfines ayant 2 à 6 atomes de carbone , et leurs mélanges ; lesdits comonomères desdits latex de chlorure de vinyle sont choisis parmi les esters acryliques ayant 1 à 12 atomes de carbone dans le groupe alkyle , l'acrylonitrile , l'acétate de vinyle , le styrène , le chlorure de vinylidène dans le cas d'un latex de chlorure de vinyle , et leurs mélanges . lesdits comonomères desdits latex de nitrile sont choisis parmi le butadiène , le styrène , l'isoprène , du chloroprène , les esters acryliques contenant 1 à 12 atomes de carbone dans le groupe alkyle , et leurs mélanges ; et lesdits comonomères desdits latex oléfiniques sont choisis parmi l'acétate de vinyle , le chlorure de vinyle , les esters acryliques ayant 1 à 12 atomes de carbone dans le groupe alkyle , et leurs mélanges .

9. Article selon la revendication 5,choisi parmi du papier et des étoffes tissées et non-tissées que l'on obtient à partir de fibres liées à l'aide dudit latex ou traitées avec ledit latex .

10. Article selon la revendication 5 , dans lequel lesdites fibres sont choisies aprmi les fibres naturelles , les fibres synthétiques , et leurs mélanges .

11. Article selon la revendication 5 , dans lequel lesdites fibres sont choisies parmi des fibres de cellulose , des fibres de polyoléfine , des fibres de polyester(s) , des fibres de nylon , et leurs mélanges.

12. Article selon la revendication 5 , dans lequel la quantité d'acide itaconique est de 1 à 5 parties en poids et la quantité d'acrylamide est de 1 à 5 parties en poids .

## Patentansprüche

1. Latex, umfassend Polymer-Feststoffe, die durch Polymerisieren wenigstens eines Monomers in Gegenwart von 0,1 bis 10 Gew.-Teilen Itaconsäure und 0,1 bis 10 Gew.-Teilen Acrylamid hergestellt sind, wobei diese Mengen auf eine Gesamt-Menge von 100 Gew.-Teilen aller Monomerer, die polymerisiert werden, bezogen sind,
wobei der Latex aus Acrylester-Latices, Dien-Latices, Styrol-Latices, Vinylacetat-Latices, Vinylchlorid-Latices, Vinylidenchlorid-Latices, ungesättigten Nitril-Latices und olefinischen Latices ausgewählt ist,
wobei die Latices dadurch gekennzeichnet sind, daß sie keinerlei Formaldehyd enthaltendes Monomer in polymerisierter Form enthalten, keinen Formaldehyd entwickeln und sich nicht unter Bildung von Formaldehyd zersetzen.

2. Latex nach Anspruch 1, worin der Latex aus Latices ausgewählt ist, die wenigstens ein hauptsächliches Monomer in polymerisierter Form enthalten, das aus Alkylacrylaten mit 1 bis 12 Kohlenstoff-Atomen in der Alkyl-Gruppe, Styrol, Dienen mit 4 Kohlenstoff-Atomen, Vinylacetat, Vinylchlorid, vinylidenchlorid, ungesättigten Nitrilen mit 3 bis 6 Kohlenstoff-Atomen, Olefinen mit 2 bis 6 Kohlenstoff-Atomen und deren Mischungen ausgewählt ist.

3. Latex nach Anspruch 1, worin
die Acrylester-Latices aus Homopolymeren der genannten Alkylacrylate und Copolymeren derselben mit einem oder mehreren geeigneten Comonomeren ausgewählt sind, wobei diese Copolymeren wenigstens 50 Gew.-% polymerisiertes Alkylacrylat enthalten;
die Dien-Latices aus Homopolymeren der genannten Diene mit 4 Kohlenstoff-Atomen und Copolymeren derselben mit einem oder mehreren geeigneten Comonomeren ausgewählt sind, wobei diese Copolymeren wenigstens 20 Gew.-% polymerisiertes Dien enthalten;
die Styrol-Latices aus Homopolymeren des Styrols und Copolymeren desselben mit einem oder mehreren geeigneten Comonomeren ausgewählt sind, wobei diese Copolymeren wenigstens 50 Gew.-% polymerisiertes Styrol enthalten;
die Vinylacetat-Latices aus Homopolymeren des Vinylacetats und Copolymeren desselben mit geeigneten Comonomeren ausgewählt sind, wobei diese Copolymeren wenigstens 50 Gew.-% polymerisiertes Vinylacetat enthalten;
die Vinylchlorid-Latices aus Homopolymeren des Vinylchlorids und des Vinylidenchlorids und Copolymeren derselben mit einem oder mehreren geeigneten Comonomeren ausgewählt sind, wobei diese Copolymeren wenigstens 50 Gew.-% polymerisiertes Vinylchlorid oder Vinylidenchlorid enthalten;
die Nitril-Latices aus Homopolymeren ungesättigter Nitrile mit 3 bis 6 Kohlenstoff-Atomen und Copolymeren derselben mit geeigneten Comonomeren ausgewählt sind, wobei diese Copolymeren wenigstens 50 Gew.-% polymerisierte ungesättigte Nitrile mit 3 bis 6 Kohlenstoff-Atomen enthalten; und
die olefinischen Latices aus Homopolymeren von Olefinen mit 2 bis 6 Kohlenstoff-Atomen und Copolymeren derselben mit geeigneten Comonomeren ausgewählt sind, wobei diese Copolymeren wenigstens 50 Gew.-% der polymerisierten Olefine mit 2 bis 6 Kohlenstoff-Atomen enthalten.

4. Latex nach Anspruch 3, worin
die Alkylacrylate der Acrylsäureester-Latices 1 bis 12 Kohlenstoff-Atome in der Alkyl-Gruppe enthalten und die Comonomeren aus Styrol, Acrylnitril, Vinylchlorid, Vinylacetat und deren Mischungen ausgewählt sind;
die Diene der Dien-Latices aus Butadien, Isopren und Chloropren ausgewählt sind und die Comonome-

19

ren aus Styrol, substituierten Styrolen, Acrylnitril, Acrylestern mit 1 bis 12 Kohlenstoff-Atomen in der Alkyl-Gruppe und deren Mischungen ausgewählt sind;

das Styrol der Styrol-Latices aus Styrol selbst, α-Methylstyrol und Chlorstyrol ausgewählt ist und die Comonomeren aus Butadien, Vinylacetat, Acrylnitril, Acrylestern mit 1 bis 12 Kohlenstoff-Atomen in der Alkyl-Gruppe und deren Mischungen ausgewählt sind;

die Comonomeren der Vinylacetat-Latices aus Acrylestern mit 1 bis 12 Kohlenstoff-Atomen in der Alkyl-Gruppe, Styrol, Acrylnitril, Olefinen mit 2 bis 6 Kohlenstoff-Atomen und deren Mischungen ausgewählt sind;

die Comonomeren der Vinylchlorid-Latices aus Acrylestern mit 1 bis 12 Kohlenstoff-Atomen in der Alkyl-Gruppe, Acrylnitril, Vinylacetat, Styrol, Vinylidenchlorid im Fall eines Vinylchlorid-Latex und deren Mischungen ausgewählt sind;

die Comonomeren der Nitril-Latices aus Butadien, Styrol, Isopren, Chloropren, Acrylestern mit 1 bis 12 Kohlenstoff-Atomen in der Alkyl-Gruppe und deren Mischungen ausgewählt sind; und

die Comonomeren der olefinischen Latices aus Vinylacetat, Vinylchlorid, Acrylestern mit 1 bis 12 Kohlenstoff-Atomen in der Alkyl-Gruppe und deren Mischungen ausgewählt sind.

5. Fertigungsgegenstand, umfassend Fasern, die zusammen mit einem Latex gebunden sind, das Polymer-Feststoffe umfaßt, die durch Polymerisieren wenigstens eines Monomers in Gegenwart von 0,1 bis 10 Gew.-Teilen Itaconsäure und 0,1 bis 10 Gew.-Teilen Acrylamid hergestellt sind, wobei diese Mengen auf eine Gesamt-Menge von 100 Gew.-Teilen aller Monomerer, die polymerisiert werden, bezogen sind, wobei der Latex aus Acrylester-Latices, Dien-Latices, Styrol-Latices, Vinylacetat-Latices, Vinylchlorid-Latices, Vinylidenchlorid-Latices, ungesättigten Nitril-Latices und olefinischen Latices ausgewählt ist,

wobei die Latices dadurch gekennzeichnet sind, daß sie keinerlei Formaldehyd enthaltendes Monomer in polymerisierter Form enthalten, keinen Formaldehyd entwickeln und sich nicht unter Bildung von Formaldehyd zersetzen, sowie weiterhin dadurch, daß die Latices gleichzeitig eine verbesserte wäßrige Zugfestigkeit und eine verbesserte Lösungsmittel-Dehnung mitbringen.

6. Gegenstand nach Anspruch 5, worin der Latex aus Latices ausgewählt ist, die wenigstens ein hauptsächliches Monomer in polymerisierter Form enthalten, das aus Alkylacrylaten mit 1 bis 12 Kohlenstoff-Atomen in der Alkyl-Gruppe, Styrol, Dienen mit 4 Kohlenstoff-Atomen, Vinylacetat, Vinylchlorid, Vinylidenchlorid, ungesättigten Nitrilen mit 3 bis 6 Kohlenstoff-Atomen, Olefinen mit 2 bis 6 Kohlenstoff-Atomen und deren Mischungen ausgewählt ist.

7. Gegenstand nach Anspruch 5, worin

die Acrylester-Latices aus Homopolymeren der genannten Alkylacrylate und Copolymeren derselben mit einem oder mehreren geeigneten Comonomeren ausgewählt sind, wobei diese Copolymeren wenigstens 50 Gew.-% polymerisiertes Alkylacrylat enthalten;

die Dien-Latices aus Homopolymeren der genannten Diene mit 4 Kohlenstoff-Atomen und Copolymeren derselben mit einem oder mehreren geeigneten Comonomeren ausgewählt sind, wobei diese Copolymeren wenigstens 20 Gew.-% polymerisiertes Dien enthalten;

die Styrol-Latices aus Homopolymeren des Styrols und Copolymeren desselben mit einem oder mehreren geeigneten Comonomeren ausgewählt sind, wobei diese Copolymeren wenigstens 50 Gew.-% polymerisiertes Styrol enthalten;

die Vinylacetat-Latices aus Homopolymeren des vinylacetats und copolymeren desselben mit geeigneten comonomeren ausgewählt sind, wobei diese Copolymeren wenigstens 50 Gew.-% polymerisiertes Vinylacetat enthalten;

die Vinylchlorid-Latices aus Homopolymeren des Vinylchlorids und des Vinylidenchlorids und Copolymeren derselben mit einem oder mehreren geeigneten Comonomeren ausgewählt sind, wobei diese Copolymeren wenigstens 50 Gew.-% polymerisiertes vinylchlorid oder Vinylidenchlorid enthalten;

die Nitril-Latices aus Homopolymeren ungesättigter Nitrile mit 3 bis 6 Kohlenstoff-Atomen und Copolymeren derselben mit geeigneten Comonomeren ausgewählt sind, wobei diese Copolymeren wenigstens 50 Gew.-% polymerisierte ungesättigte Nitrile mit 3 bis 6 Kohlenstoff-Atomen enthalten; und

die olefinischen Latices aus Homopolymeren von Olefinen mit 2 bis 6 Kohlenstoff-Atomen und Copolymeren derselben mit geeigneten Comonomeren ausgewählt sind, wobei diese Copolymeren wenigstens 50 Gew.-% der polymerisierten Olefine mit 2 bis 6 Kohlenstoff-Atomen enthalten.

8. Gegenstand nach Anspruch 7, worin

die Alkylacrylate der Acrylsäureester-Latices 1 bis 12 Kohlenstoff-Atome in der Alkyl-Gruppe enthalten und die Comonomeren aus Styrol, Acrylnitril, Vinylchlorid, Vinylacetat und deren Mischungen ausgewählt sind;

die Diene der Dien-Latices aus Butadien, Isopren und Chloropren ausgewählt sind und die Comonomeren aus Styrol, substituierten Styrolen, Acrylnitril, Acrylestern mit 1 bis 12 Kohlenstoff-Atomen in der Alkyl-Gruppe und deren Mischungen ausgewählt sind;

das Styrol der Styrol-Latices aus Styrol selbst, α-Methylstyrol und Chlorstyrol ausgewählt ist und die Comonomeren aus Butadien, Vinylacetat, Acrylnitril, Acrylestern mit 1 bis 12 Kohlenstoff-Atomen in der Alkyl-Gruppe und deren Mischungen ausgewählt sind;

die comonomeren der Vinylacetat-Latices aus Acrylestern mit 1 bis 12 Kohlenstoff-Atomen in der Alkyl-Gruppe, Styrol, Acrylnitril, Olefinen mit 2 bis 6 Kohlenstoff-Atomen und deren Mischungen ausgewählt sind;

die Comonomeren der Vinylchlorid-Latices aus Acrylestern mit 1 bis 12 Kohlenstoff-Atomen in der Alkyl-Gruppe, Acrylnitril, Vinylacetat, Styrol, Vinylidenchlorid im Fall eines Vinylchlorid-Latex und deren Mischungen ausgewählt sind;

die Comonomeren der Nitril-Latices aus Butadien, Styrol, Isopren, Chloropren, Acrylestern mit 1 bis 12 Kohlenstoff-Atomen in der Alkyl-Gruppe und deren Mischungen ausgewählt sind; und

die Comonomeren der olefinischen Latices aus Vinylacetat, Vinylchlorid, Acrylestern mit 1 bis 12 Kohlenstoff-Atomen in der Alkyl-Gruppe und deren Mischungen ausgewählt sind.

9. Gegenstand nach Anspruch 5, ausgewählt aus Papier und gewebten und ungewebten Textilmaterialien, die aus mittels des Latex gebundenen oder mit dem Latex behandelten Fasern hergestellt sind.

10. Gegenstand nach Anspruch 5, worin die Fasern aus natürlichen Fasern, synthetischen Fasern und deren Mischungen ausgewählt sind.

11. Gegenstand nach Anspruch 5, worin die Fasern aus Cellulose-Fasern, Polyolefin-Fasern, Polyester-Fasern, Nylon-Fasern und deren Mischungen ausgewählt sind.

12. Gegenstand nach Anspruch 5, worin die Menge Itaconsäure 1 bis 5 Gew.-Teile beträgt und die Menge Acrylamid 1 bis 5 Gew.-Teile beträgt.